# EUROPÄISCHE PATENTSCHRIFT

(11) **EP 2 747 934 B1**
(45) Veröffentlichungstag und Bekanntmachung des Hinweises auf die Patenterteilung: **14.09.2016**
(21) Anmeldenummer: 12751435.4
(22) Anmeldetag: 31.07.2012
(51) Int. Cl.: B23K 31/12, B23K 26/34, B22F 3/105, B29C 67/00, G01N 27/61, G01N 27/90, B23K 26/08, B23K 37/02, B23Q 1/48

(54) **VERFAHREN UND VORRICHTUNG ZUR GENERATIVEN HERSTELLUNG EINES BAUTEILS**
METHOD AND DEVICE FOR THE GENERATIVE PRODUCTION OF A COMPONENT
PROCÉDÉ ET DISPOSITIF DESTINÉS À LA FABRICATION GÉNÉRATIVE D'UNE PIÈCE

(30) Priorität: 27.08.2011 DE 102011111818
(43) Veröffentlichungstag der Anmeldung: 02.07.2014
(73) Patentinhaber: MTU Aero Engines GmbH, 80995 München (DE)
(72) Erfinder: BAMBERG, Joachim, 85221 Dachau (DE); SATZGER, Wilhelm, 80807 München (DE); HESS, Thomas, 81541 München (DE)
(86) Internationale Anmeldenummer: PCT/DE2012/000768
(87) Internationale Veröffentlichungsnummer: WO 2013/029581

(56) Entgegenhaltungen:
- EP-B1- 1 815 936
- JP-A- 2005 262 218
- US-A1- 2004 139 805
- ANTONELLI G ET AL: "QUALIFICATION OF A FREQUENCY SCANNING EDDY CURRENT EQUIPMENT FOR NONDESTRUCTIVE CHARACTERIZATION OF NEW AND SERVICED HIGH-TEMPERATURE COATINGS", INTERNATIONAL GAS TURBINE AND AEROENGINE CONGRESS ANDEXPOSITION, XX, XX, 4. Juni 2001 (2001-06-04), Seiten 1-08, XP009007444,

## Beschreibung

Die Erfindung betrifft ein Verfahren zur generativen Herstellung eines Bauteils und eine Vorrichtung zur Durchführung eines derartigen Verfahrens.

Bei einem generativen Herstellungsprozess wie SLM (Selective Laser Melting) können durch verschiedene Ursachen Fehlstellen in dem Bauteil entstehen. Die Fehlstellen können zu einer Qualitätsminderung des Bauteils führen und werden herkömmlicherweise nur durch eine Prüfung am fertigen Bauteil gefunden. Beispielhafte Fehlstellen sind Mikrorisse, Fremdeinschlüsse und unaufgeschlossenes Material. Die Prüfungen sind entweder zerstörend oder zerstörungsfrei. Die zerstörenden Prüfungen erfordern jedoch die Herstellung von einer großen Anzahl an Bauteilen oder Prüfkörpern. Die zerstörungsfreien Prüfverfahren wie z.B. Röntgencomputertomographie sind technisch aufwändig, zeit- und kostenintensiv. Zwar kann durch eine Überwachung der Temperatur und der Geometrie des Schmelzbades indirekt Schlüsse auf das Bauteil gezogen werden, jedoch ermöglicht diese Prüftechnik keine genauere Kontrolle der Materialeigenschaften und die Erkennung von Fehlstellen.

Ein Verfahren zur zerstörungsfreien Prozesskontrolle während der generativen Herstellung ist in der Druckschrift EP 1 815 936 B1 beschrieben. Bei diesem Verfahren wird eine Ultraschallprüfung während der Herstellung durchgeführt. Gegebenenfalls kann eine die Ultraschallprüfung begleitende Wirbelstromprüfung erfolgen. Nachteilig an diesen Verfahren ist jedoch, dass von dem Schallfeld und/oder dem Wirbelfeld eine Vielzahl von Materialschichten erfasst bzw. gescannt werden und somit einzelne Materialschichten nicht genau erfassbar sind. Zudem erfordert die Ultraschallprüfung eine komplexe Systemsteuerung. Die Wirbelstromprüfung kann zwar grundsätzlich mit einer Eindringtiefe betrieben werden, dass ausschließlich einzelne Materialschichten erfasst werden. Allerdings sind hierzu Prüffrequenzen notwendig, die bspw. eine mit vertretbarem Aufwand nicht bewältigbare Justage der Wirbelstromsensoren und Lift-off-Effekten erfordern.

Aufgabe der Erfindung ist es, ein Verfahren zur generativen Herstellung eines Bauteils, das die vorgenannten Nachteile beseitigt und eine Materialcharakterisierung einzelner Materialschichten erlaubt, sowie eine Vorrichtung zur Durchführung eines derartigen Verfahrens zu schaffen. Diese Aufgabe wird gelöst durch ein Verfahren mit den Schritten des Patentanspruchs 1 und durch eine Vorrichtung mit den Merkmalen des Patentanspruchs 8.

Bei einem erfindungsgemäßen Verfahren zur generativen Herstellung eines Bauteils wird zuerst eine Materialschicht mit einer konstanten Schichtdicke aufgetragen. Dann wird ein Bereich der Materialschicht gemäß einem Bauteilquerschnitt verfestigt. Danach wird ein Wirbelstromscan des verfestigten Bereichs erzeugt, wobei eine Scantiefe einem Vielfachen der Schichtdicke entspricht. Dann wird eine Materialcharakterisierung des verfestigten Bereichs unter Berücksichtigung eines vorhergehenden Wirbelstromscans von verfestigten Bereichen tieferliegender Materialschichten ermittelt. Dann werden die vorhergehenden Schritte wiederholt, bis das Bauteil vollständig aufgebaut ist.

Erfindungsgemäß wird beim Vergleich der Wirbelstromscans eine mit der Tiefe abnehmende Gewichtung der Materialschichten berücksichtigt. Mit dem erfindungsgemäßen Verfahren ist es möglich, ein Bauteil über sein gesamtes Volumen vollständig Materialschicht für Materialschicht zu charakterisieren. Nach der Fertigstellung des Bauteils liegt eine vollständige, hochauflösende 3-dimensionale "Durchleuchtung" und Materialcharakterisierung mittels Wirbelstrom vor. Der Qualitätssicherungsaufwand wird verringert, da aufwändige und weniger präzise Nachuntersuchungen am fertigen Bauteil entfallen. Die Materialschichten haben gewöhnlich eine Schichtdicke von 20µm bis 40µm und sind somit wesentlich kleiner als eine Eindringtiefe des Wirbelfeldes. Durch eine Signalanalyse, insbesondere eine Differenzierung, der 3D-Wirbelstromscandaten der aufeinanderfolgenden Materialschichten werden die Materialkennwerte jeder einzelnen Materialschicht zerstörungsfrei ermittelt. Die Differenzierung der 3D-Wirbelstromscandaten kann frei wählbar im Raum erfolgen. Zum Beispiel kann die Differenzierung in Richtung einer mechanischen Hauptbelastung zur Bewertung von Materialungänzen durchgeführt werden. Die Wirbelstromscandaten geben Aufschlüsse bspw. über die gemessene elektrische Leitfähigkeit und Permeabilität sowie u.a. Informationen über die Porosität, Art der Fehlstellen, Grad der Aufschmelzung und Textur.

Da die Eindringtiefe des Wirbelfeld mit der Tiefe exponentiell abnimmt, ist es zur Erzielung eines besonders präzisen Messergebnisses vorteilhaft, wenn beim Vergleich der Wirbelstromscans bzw. der Wirbelstromscandaten eine mit der Tiefe abnehmende Gewichtung der Materialschichten berücksichtigt wird.

Um die Herstellungsdauer des Bauteils durch die Wirbelstromprüfung nicht zu verlängern, erfolgt jeder Wirbelstromscan bevorzugterweise während des Auftragens einer neuen Materialschicht. Dabei hat sich gezeigt, dass die nicht zusammengeschmolzenen Pulverkörner der neuen Materialschicht sowie ein das Bauteil umgebende Pulverbett von den Wirbelstromscans nicht erfasst werden.

Bevorzugterweise werden die Wirbelstromscans in einem Frequenzbereich von 1 MHz bis 10 MHz durchgeführt. Hierdurch wird eine Scantiefe von etwa 0,5mm erreicht, wodurch ca. 10 bis 20 Materialschichten gleichzeitig gescannt werden. Ein derartiger Frequenzbereich ist gut beherrschbar und erfordert beispielsweise keine aufwändige Sensorenjustage.

Zur hochpräzisen Bewertung der Fehlstellen kann bei jedem Wirbelstromscan eine Multifrequenzmessung durchgeführt werden.

Zur weiteren Steigerung der Präzision des erfindungsgemäßen Prüfverfahrens können Wirbelstrom-Microscans durchgeführt werden. Hierzu können bei jedem Wirbelstromscan mehrere Bilder einer Materialschicht mit einem Versatz unterhalb eines Sensorabstandes aufgenommen werden.

Neben einer 100%igen Prüfung und Charakterisierung des Bauteils können die Wirbelstromscandaten auch zur Überwachung, Steuerung und Regelung des generativen Fertigungsprozesses genutzt werden. Beispielsweise kann die ermittelte Materialcharakterisierung zur Korrektur von Verfahrensparametern in Echtzeit verwendet werden, so dass Fehlstellen nicht nur erkannt werden, sondern dessen Wachstum unterbunden wird.

Eine wirksame Reinigung der Wirbelstromsensoren lässt sich beispielsweise durch eine Schüttelbewegung erzielen. Diese Art der Reinigung hat den Vorteil, dass sich eine Verwendung von Pinseln und drgl. erübrigt.

Eine erfindungsgemäße Vorrichtung zur Durchführung eines erfindungsgemäßen Verfahrens hat ein zum zu fertigenden Bauteil relativ bewegbares Wirbelstromarray zum Scannen eines verfestigten Bereiches einer Materialschicht, wobei eine Scantiefe einem Vielfachen der Schichtdicke entspricht, und ein Auswertesystem zur Ermittlung einer Materialcharakterisierung des verfestigten Bereiches unter Berücksichtigung eines vorhergehenden Wirbelstromscans von verfestigten Bereichen tieferliegender Materialschichten. Das Wirbelstromarray und das Auswertesystem lassen sich minimalinvasiv in die Vorrichtung integrieren.

Erfindungsgemäß berücksichtigt das Auswertesystem beim Vergleich der Wirbelstromscans eine mit der Tiefe abnehmende Gewichtung der Materialschichten. Vorzugsweise ist das Wirbelstromarray rückseitig einer Rakel positioniert. Durch die Anordnung des Wirbelstromarrays an der Rakel wird quasi die Präzision der Rakel in Form von hochgenauem, minimalem Abstand zum bereits partiell aufgebauten Bauteil auf das Wirbelstromarray übertragen.

Bevorzugterweise ist das Wirbelstromarray ein Wirbelstromlineararray, das sich in Längsrichtung der Rakel erstreckt. Zum einen erstreckt sich das Wirbelstromarray hierdurch stets über das gesamte zu fertigende Bauteil. Zum anderen sind durch die Linearausbildung die Sensoren eng an der Rakel positioniert, so dass die mit dem Wirbelstromarray versehene Rakel pro Schichtauftrag die gleiche bzw. nahezu die gleiche Strecke wie eine Rakel ohne ein Wirbelstromarray zurücklegt.

Das Wirbelstromarray kann über eine Vielzahl von Einzelsensoren oder aus Halbtransmissionssensoren in beispielsweise einer hexagonalen Anordnung verfügen. Insbesondere durch die Verwendung von Halbtransmissionssensoren kann eine Sende- und Empfangselektronik technisch einfach ausgeführt sein, da jeder Halbtransmissionssensor bzw. jede Halbtransmissionsspule sowohl senden als auch empfangen kann. Zudem hat ein Halbtransmissionssensor im Vergleich zum Einzelsensör ein einziges scharf ausgeprägtes Maximum.

Zur Reinigung des Wirbelstromarrays mittels einer Schüttelbewegung kann die Vorrichtung eine Schütteleinrichtung mit zumindest einem Piezoelement aufweisen, die mit dem Wirbelstromarray in mechanischer Wirkverbindung steht.

Um stets einen optimalen Abstand des Wirbelstromarrays zum partiell aufgebauten Bauteil auf zuweisen, kann die Vorrichtung eine automatische Abstandskontrolleinrichtung zur Einstellung eines Abstandes des Wirbelstromarrays zur jeweils obersten abschnittsweise verfestigten Materialschicht aufweisen.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine Darstellung einer erfindungsgemäßen Vorrichtung zur erfindungsgemäßen Herstellung eines Bauteils,
- Figuren 2a bis 2e: beispielhafte Fehlstellen des Bauteils,
- Figur 3: eine Draufsicht auf ein Pulverbett der Vorrichtung,
- Figur 4: einen Verfahrensschritt n zur Durchführung des erfindungsgemäßen Verfahrens, und
- Figur 5: einen Verfahrensschritt n+1 des erfindungsgemäßen Verfahrens.

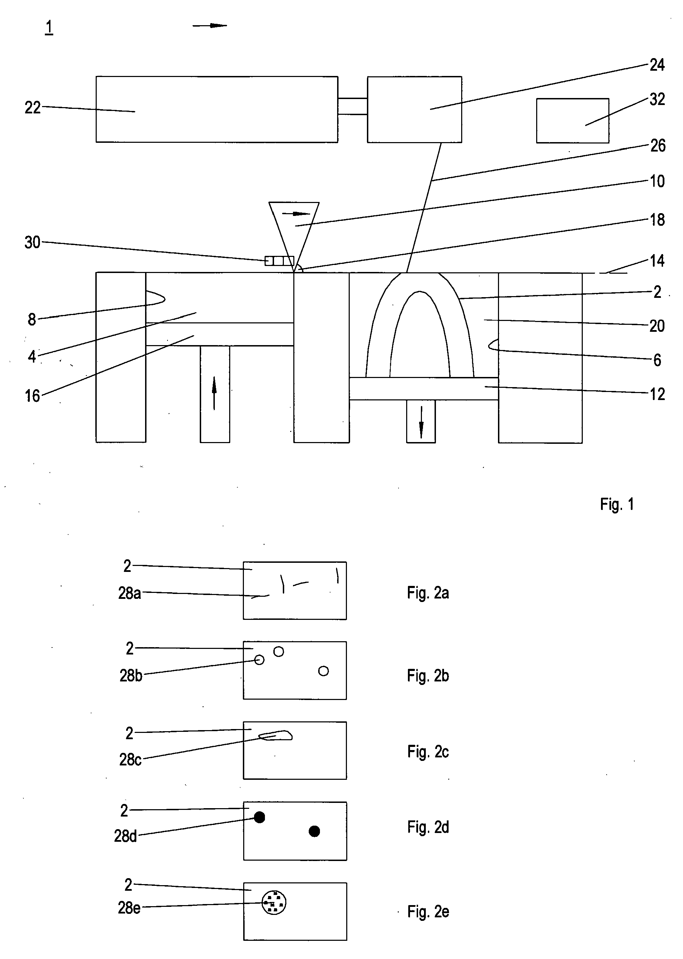

In Figur 1 ist eine erfindungsgemäße Vorrichtung 1 zur generativen Herstellung eines Bauteils 2 gezeigt. Das Bauteil 2 ist beispielsweise eine Komponente eines Flugzeugtriebwerks und wird im sogenannten Selective Laser Melting Prozess schichtweise aus einem metallischen Pulver 4 aufgebaut.

Die Vorrichtung 1 hat einen Arbeitsraum 6, einen Pulverraum 8 und eine Rakel 10.

In dem Arbeitsraum 6 wird das Bauteil 2 schichtweise aufgebaut. Er ist bodenseitig von einem Senkkolben 12 begrenzt, der zur Einstellung einer Arbeitsebene 14 in Vertikalrichtung absenkbar ist.

Der Pulverraum 8 dient zur Bereitstellung des Pulvers 4. Er ist bodenseitig von einem Hebekolben 16 begrenzt, der zum Nachführen des Pulvers 4 in die Arbeitsebene 14 in Vertikalrichtung anhebbar ist.

Die Rakel 10 dient zur Zuführung des Pulvers 4 aus dem Pulverraum 8 in den Arbeitsraum 6. Sie führt eine in der Arbeitsebene 14 liegende und gemäß der Darstellung in Figur 1 von links nach rechts orientierte Schiebewegung aus, mittels der sie das Pulver 4 bzw. eine Pulvermenge 18 für eine Pulver- bzw. Materialschicht des Bauteils 2 aus dem Pulverraum 8 dem Arbeitsraum 6 zuführt. Da das Pulver 4 über den gesamten in der Arbeitsebene 14 liegenden Querschnitt des Arbeitsraums 6 zugeführt wird, jedoch nur der Bereich der jeweiligen Materialschicht verfestigt wird, der eine Querschnittsfläche des Bauteils 2 abbildet, entsteht um das Bauteil 2 herum ein Pulverbett 20.

Zur Verfestigung des jeweiligen Bereiches der Materialschichten hat die Vorrichtung 1 ein Lasersystem 22 und ein mit dem Lasersystem 22 zusammenwirkendes Optiksystem 24, mittels dem ein von dem Lasersystem 22 erzeugter Laserstrahl 26 entsprechend der jeweiligen Querschnittsfläche über die Materialschicht führbar ist.

Erfindungsgemäß wird während der Herstellung des Bauteils 2 eine Wirbelstromprüfung in Echtzeit bzw. eine online-Wirbelstromprüfung des zuletzt verfestigten Materialschichtenbereichs durchgeführt. Die Prüfung dient zur Erkennung von beispielhaft in den Figuren 2a bis 2e gezeigten Fehlstellen 28 wie Mikrorissen 28a, Mikroporen 28b, Seigerungen 28c, Fremdeinschlüssen 28d oder unaufgeschmolzenes Material 28e. Zur Durchführung der Prüfung hat die Vorrichtung 1 ein in Figur 1 gezeigtes Wirbelstromarray 30 und ein Auswertesystem 32.

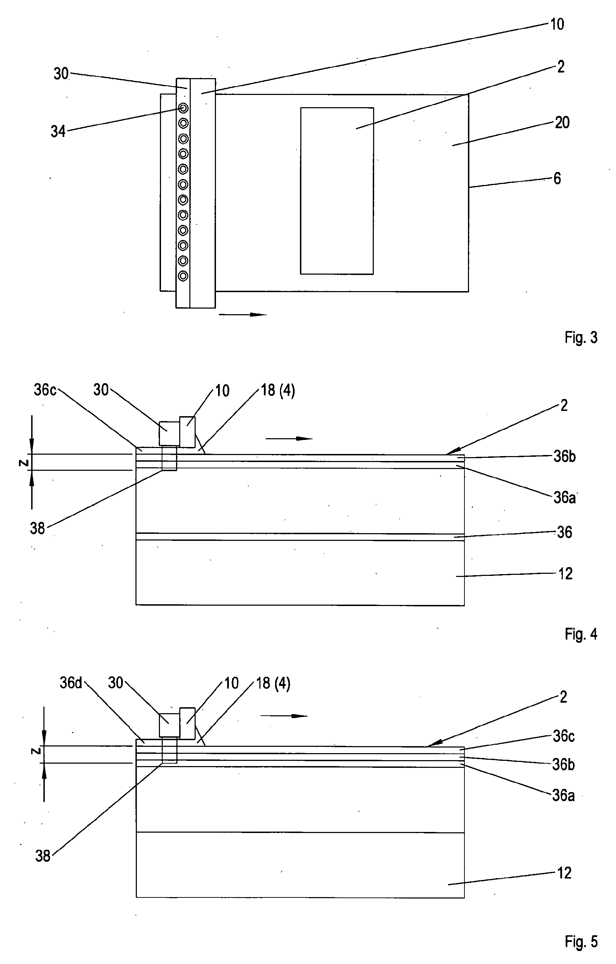

Das Wirbelstromarray 30 dient zur Erzeugung eines Wirbelstromscans und ist rückseitig an der Rakel 10 angeordnet ist. Es ist, wie in Figur 3 gezeigt, ein Wirbelströmlineararray, welches sich in Längsrichtung der Rakel 10 erstreckt und aus einer Vielzahl von hintereinander angeordneten Sensoren 34 besteht. Die Sensoren 34 sind in einem Hochtemperaturkunststoff eingebettet und zur Reduzierung eines sende- und empfangselektronischen Aufwandes bevorzugterweise als Halbtransmissionssensoren bzw. Halbtransmissionsspulen ausgebildet.

Zur Einstellung eines optimalen Abstandes des Wirbelstromarrays 30 zur Arbeitsebene 14 bzw. zur obersten abschnittsweise verfestigten Materialschicht verfügt die Vorrichtung 1 über eine nicht gezeigte automatische Abstandskontrolleinrichtung.

Zur Reinigung des Wirbelstromarrays 30 weist die Vorrichtung 1 eine nicht gezeigte Schütteleinrichtung mit zumindest einem Piezoelement auf. Die Schütteleinrichtung steht mit dem Wirbelstromarray 30 in mechanischer Wirkverbindung und versetzt das Wirbelstromarray 30 bei einer Ansteuerung in eine Schüttelbewegung, wodurch das Pulver 4, welches sich an den Sensoren 34 angelagert hat, abfällt.

Das Auswertesystem 32 ermittelt aus einem aktuellen Wirbelstromscan eine Materialcharakterisierung der verfestigten Bereiche der Materialschichten unter Berücksichtigung eines vorhergehenden Wirbelstromscans von verfestigten Bereichen tieferliegender Materialschichten. Hierzu wendet das Auswertesystem 32 einen Rekursionsalgorithmus an, der zum einen die mit zunehmender Scantiefe bzw. Eindringtiefe eines Wirbelfeldes abnehmende Abbildungsgenauigkeit berücksichtigt. Die Eindringtiefe verläuft in Figur 3 orthogonal zur Zeichenebene und ist in den Figuren 4 und 5 mit dem Bezugzeichen z versehen. Zum anderen berücksichtigt der Rekursionsalgorithmus, dass die Materialschichten bei jedem neuen Pulverauftrag eine größere Tiefenlage einnehmen bzw. weiter von der jeweils obersten Materialschicht entfernt werden. Das Auswertesystem 32 kommuniziert mit einer Systemsteuerung der Vorrichtung 1 und ermöglicht so neben einer Überwachung der Materialschichten, eine Überwachung der Steuerung und Regelung des generativen Fertigungsprozesses. Beispielsweise kann die ermittelte Materialcharakterisierung zur Korrektur von Verfahrensparametern in Echtzeit verwendet werden, so dass erkannte Fehlstellen 28 bzgl. ihren Auswirkungen bewertet, ihr Wachstum unterbunden und weitere gleichartige Fehlstellen 28 verhindert werden können.

Im Folgenden wird ein erfindungsgemäßes Verfahren zur Herstellung des Bauteils 2 mit einer Prüfung des Bauteils 2 während der Herstellung anhand der Figuren 4 und 5 erläutert: Das Bauteil 2 wird aus einer Vielzahl von Materialschichten aufgebaut, von denen aus Gründen der Übersichtlichkeit in Figur 4 zwei Materialschichten 36a, 36b beziffert sind. Jede Materialschicht 36a, 36b besteht aus einem Pulver 4, welches nach dem Aufbringen nur in den Bereichen verfestigt wird, die einen Querschnitt des Bauteils 2 abbilden. Nach dem abschnittsweisen Verfestigen der jeweils zuletzt aufgetragenen bzw. obersten Materialschicht 36b wird eine neue Materialschicht 36c aus dem Pulver 4 aufgebaut. Das Pulver 4 wird jeweils durch die Rakel 10 in einer konstanten Schichtdicke von ca. 20µm bis 40µm auf die vorhergehende und ursprünglich oberste Materialschicht 36b aufgebracht.

Beim Verfahren der Rakel 10 zum Auftragen des Pulvers 4 wird das Wirbelstromarray 30 durch die rückseitige Anbindung an der Rakel 10 mitgeführt, welches ein Wirbelfeld 38 mit einer Eindringtiefe z erzeugt. Bevorzugterweise wird das Wirbelstromarray 30 in einem Frequenzbereich von 1 MHz bis 10 MHz betrieben und erzeugt so ein Wirbelfeld 38 mit einer Eindringtiefe von ca. 0,5 mm, die einem Vielfachen der Schichtdicke entspricht. Hierdurch werden gleichzeitig eine Vielzahl von Materialschichten 36a, 36b gespannt. Das Wirbelfeld 38 nimmt jedoch exponentiell mit der Eindringtiefe z ab, so dass die in Figur 4 gezeigte oberste Materialschicht 36b nach dem Aufbringen und dem abschnittsweisen Verfestigen einer weiteren Materialschicht 36c eine mittlere Materialschicht 36b bildet und somit beim Wirbelstromscan der Materialschicht 36c (Figur 5) eine geringe Gewichtung als beim eigenen Wirbelstromscann hat (Figur 4). Das Ergebnis jeden Wirbelstromscans ist eine gemittelte elektrische Materialcharakterisierung des Bauteils 2 über eine Eindringtiefe z, die bei dem gewählten Frequenzbereich etwa 10 bis 20 Materialschichten 36a, 36b, 36c umfasst. Nichtverfestigte Materialschichten (Figur 4, Materialschicht 36c; Figur 5, Materialschicht 36d) sowie das nicht verfestigte Pulverbett 20 werden von den Wirbelstromscans nicht erfasst und somit nicht abgebildet. Nach der Durchführung eines Wirbelstromscans wird unter Anwendung des Rekursionsalgorithmuses eine Materialcharakterisierung der jeweils obersten Materialschicht 36b (Figur 4) bzw. 36c (Figur 5) erstellt, wobei die mit der Eindringtiefe z abnehmende Gewichtung der Materialschichten 36a, 26b, 36c und die sich verändernde Tiefenlage der Materialschichten 36a, 36b, 36c nach jedem neuen Schichtauftrag berücksichtigt wird. Mit anderen Worten mit Bezugnahme zur Figur 5: Der Rekursionsalgorithmus ermittelt eine Materialcharakterisierung des verfestigten Bereichs der jeweils obersten Materialschicht 36c unter Berücksichtigung eines aktuellen Wirbelstromscans über die Materialschichten 36a, 36b, 36c und eines vorhergehenden Wirbelstromscans von verfestigten Bereichen der tieferliegenden Materialschichten 36a, 36b. Bei jedem neuen Schichtauftrag wird somit eine vorhergehende Materialschicht vollständig und hochaufgelöst geprüft. Diese Schritte werden solange wiederholt, bis das Bauteil 2 vollständig aufgebaut ist. Selbstverständlich wird mit dem Rekursionsalgorithmus auch berücksichtigt, dass, wie in Figur 4 verdeutlicht, beim Aufbringen einer ersten Materialschicht 36 auf den Senkkolben 12 vergleichende Wirbelstromscandaten noch nicht vorliegen.

Das Wirbelstromarray 30 wird entsprechend der Rakel 10 bewegt, jedoch kann zur Steigerung der Auflösung der Wirbelstromscans ein sogenanntes Wirbelstrom-Mikroscanning durchgeführt werden, bei dem sich überlagernde Wirbelscanbilder mit einem Versatz unterhalb eines Abstandes benachbarter Sensoren 34 aufgenommen werden.

Zur hochpräzisen Bewertung der Fehlstellen kann bei jedem Wirbelstromscan eine Multifrequenzmessung durchgeführt werden.

Beim Auftreten einer Fehlstelle 28 wird zu deren genauen Bewertung und Auswirkung eine Datenfusion der 3D-Wirbelstromscandaten zu einem Voxeldatensatz und ein Vergleich mit Konstruktionsdaten wie 3D-CAD-Daten des Bauteils 2 durchgeführt. Zusätzlich kann eine Differenzierung der 3D-Wirbelstrommessdaten im frei wählbaren Raum zur Bewertung der Fehlstellen 28 durchgeführt werden. Beispielsweise kann zur Bewertung von nicht aufgeschmolzenem Material 28e eine Differenzierung in Richtung der mechanischen Hauptbelastung erfolgen.

Zudem werden bevorzugterweise zur Texturbestimmung und zur Ermittlung von Eigenspannungen des Bauteils 2 Analysen der 3D-Wirbelstromscandaten bezüglich Materialcharakterisierungen zwischen benachbarten Materialschichten und innerhalb der einzelnen Materialschichten durchgeführt. Ferner erfolgt bevorzugterweise ein Wirbelstromvergleich mit parallel aufgebauten Referenztestkörpern.

Ferner wird vorzugsweise das Pulver 4 hinsichtlich seiner Pulverqualität z.B. bezüglich Fremdeinschlüssen und Gleichmäßigkeit des jeweiligen Pulverauftrags bewertet.

Zusätzlich wird die Materialcharakterisierung des Bauteils 2 bevorzugterweise zur Überwachung, Steuerung und Regelung der generativen Herstellung an sich genutzt. Insbesondere wird die Materialcharakterisierung zur Korrektur von Verfahrensparametern in Echtzeit verwendet.

Offenbart ist ein Verfahren zur generativen Herstellung eines Bauteils, bei dem mittels eines Rekursionsalgorithmus aus einzelnen Messungen (Monolage für Monolage) eine elektrische Materialcharakterisierung jeder einzelne Lage bestimmt und somit das ganze Bauteil Schritt für Schritt vollständig und hochaufgelöst geprüft wird, sowie eine Vorrichtung zur Durchführung eines derartigen Verfahrens.

### Bezugszeichenliste

- 1: Vorrichtung
- 2: Bauteil
- 4: Pulver
- 6: Arbeitsraum
- 8: Pulverraum
- 10: Rakel
- 12: Senkkolben
- 14: Arbeitsebene
- 16: Hebekolben
- 18: Pulvermenge
- 20: Pulverbett
- 22: Lasersystem
- 24: Optiksystem
- 26: Laserstrahl
- 28: Fehlstelle
- 28a: Mikroriss
- 28b: Mikropore
- 28c: Steigerung
- 28d: Fremdeinschluss
- 28e: unaufgeschmolzenes Material
- 30: Wirbelstromarray
- 32: Auswertesystem
- 34: Sensoren
- 38: Wirbelfeld

- z: Eindringtiefe

## Patentansprüche

1. Verfahren zur generativen Herstellung eines Bauteils (2), mit den Schritten:
a) Auftragen einer Materialschicht (36a, 36b, 36c) mit einer konstanten Schichtdicke,
b) Verfestigen eines Bereichs der Materialschicht (36a, 36b, 36c) gemäß einem Bauteilquerschnitt,
c) Erzeugen eines Wirbelstromscans des verfestigten Bereichs, wobei eine Scantiefe (z) einem Vielfachen der Schichtdicke entspricht,
d) Ermitteln einer Materialcharakterisierung des verfestigten Bereichs unter Berücksichtigung eines vorhergehenden Wirbelstromscans von verfestigten Bereichen tieferliegender Materialschichten (36a, 36b, 36c), und
e) Wiederholen der Schritte a) bis d) bis das Bauteil (2) aufgebaut ist, **dadurch gekennzeichnet, dass** beim Vergleich der Wirbelstromscans eine mit der Tiefe abnehmende Gewichtung der Materialschichten (36a, 36b, 36c) berücksichtigt wird.

2. Verfahren nach Anspruch 1, wobei der Wirbelstromscan während des Auftragens einer neuen Materialschicht (36a, 36b, 36c) erfolgt.

3. Verfahren nach Anspruch 1oder 2, wobei die Wirbelstromscans in einem Frequenzbereich von 1 MHz bis 10 MHz durchgeführt werden.

4. Verfahren nach einem der vorhergehenden Ansprüche, wobei bei jedem Wirbelstromscan eine Multifrequenzmessung durchgeführt wird

5. Verfahren nach einem der vorhergehenden Ansprüche, wobei bei jedem Wirbelstromscan mehrere Bilder einer Materialschicht (36a, 36b, 36c) mit einem Versatz unterhalb eines Wirbelstromsensorenabstandes aufgenommen werden.

6. Verfahren nach einem der vorhergehenden Ansprüche, wobei die ermittelte Materialcharakterisierung zur Korrektur von Verfahrensparametern in Echtzeit verwendet wird.

7. Verfahren nach einem der vorhergehenden Ansprüche, wobei die Wirbelstromsensoren (34) durch eine Schüttelbewegung gereinigt werden.

8. Vorrichtung (1) zur Durchführung eines Verfahrens nach einem der vorhergehenden Ansprüche, mit einem zum zu fertigenden Bauteil (2) relativ bewegbaren Wirbelstromarray (30) zum Scannen eines verfestigten Bereichen einer Materialschicht (36a, 36b, 36c), wobei eine Scantiefe (z) einem Vielfachen der Schichtdicke entspricht, und mit einem Auswertesystem (32) zur Ermittlung einer Materialcharakterisierung des verfestigten Bereichs unter Berücksichtigung eines vorhergehenden Wirbelstromscans von verfestigten Bereichen tieferliegender Materialschichten (36a, 36b, 36c), **dadurch gekennzeichnet, dass** das Auswertesystem (32) beim Vergleich der Wirbelstromscans eine mit der Tiefe (z) abnehmende Gewichtung der Materialschichten (36a, 36b, 36c) berücksichtigt.

9. Vorrichtung nach Anspruch 8, wobei das Wirbelstromarray (30) rückseitig einer Rakel (10) positioniert ist.

10. Vorrichtung nach Anspruch 8 oder 9, wobei das Wirbelstromarray (30) ein Wirbelstromlineararray, das sich in Längsrichtung der Rakel (10) erstreckt.

11. Vorrichtung nach Anspruch 8 bis 10, wobei das Wirbelstromarray (30) Wirbelstromsensoren (34) als Einzelsensoren oder Halbtransmissionssensoren in einer hexagonalen Anordnung auf weist.

12. Vorrichtung nach einem der Ansprüche 8 bis 11, wobei eine Schütteleinrichtung mit zumindest einem Piezoelement zum Versetzen des Wirbelstromarrays (30) in eine Schüttelbewegung vorgesehen ist.

13. Vorrichtung nach einem der Ansprüche 8 bis 12, wobei eine automatische Anstandskontrolleinrichtung zur Einstellung eines Abstandes des Wirbelstromarrays (30) zur jeweils obersten verfestigten Materialschicht (36a, 36b, 36c) vorgesehen ist.

## Claims

1. A method for the generative production of a component (2), with the steps:
a) application of a material layer (36a, 36b, 36c) with a constant layer thickness,
b) solidification of a section of the material layer (36a, 36b, 36c) in accordance with the component cross section,
c) generation of a Foucault current scan of the solidified section, wherein a scan depth (z) corresponds to a multiple of the layer thickness,
d) determination of a material characterization of the solidified section taking into account a previous Foucault current scan of the deeper material layers (36a, 36b, 36c) of the solidified areas, and
e) repetition of steps a) to d) until the component (2) is constructed **characterized in that**, when comparing the Foucault current scan, a weighting of the material layers (36a, 36b, 36c) which decreases with the depth is taken into account.

2. The method according to claim 1, wherein the Foucault current scan occurs during the application of a new material layer (36a, 36b, 36c).

3. The method according to claim 1 or 2, wherein the Foucault current scan is carried out in a frequency range of between 1 MHz and 10 MHz.

4. The method according to any of the preceding claims, wherein a multi-frequency measurement is taken during each Foucault current scan.

5. The method according to any of the preceding claims, wherein multiple images are taken of a material layer (36a, 36b, 36c) with an offset of less than one Foucault current sensor distance during each Foucault current scan.

6. The method according to any of the preceding claims, wherein the determined material characterization is used for the correction of the process parameters in real time.

7. The method according to any of the preceding claims, wherein the Foucault current sensors (34) are cleaned using a shaking motion.

8. A device (1) for the execution of a method according to any of the preceding claims, with a Foucault current array (30) which can be moved in relation to the component (2) to be produced for scanning a solidified section of a material layer (36a, 36b, 36c), wherein a scan depth (z) corresponds to a multiple of the layer thickness, with an evaluation system (32) for determining a material characterization of the solidified section taking into account a previous Foucault current scan of the deeper material layers (36a, 36b, 36c) of the solidified areas, **characterized in that** the evaluation system (32) takes into account a weighting of the material layers (36a, 36b, 36c) which decreases with the depth (z) when comparing the Foucault current scan.

9. The device according to claim 8, wherein the Foucault current array (30) is positioned at the rear of a scraper (10).

10. The device according to claim 8 or 9, wherein the Foucault current array (30) is a linear Foucault current array which stretches along the length of the scraper (10).

11. The device according to any of claims 8 to 10, wherein the Foucault current array (30) has Foucault current sensors (34) as individual sensors or semi-transmission sensors in a hexagonal arrangement.

12. The device according to any of claims 8 to 11, wherein a shaker with at least one piezo element is designed for moving the Foucault current array (30) in a shaking motion.

13. The device according to any of claims 8 to 12, wherein an automatic distance control device is designed for setting a distance from the Foucault current array (30) to the uppermost solidified material layer (36a, 36b, 36c) in each case.

## Revendications

1. Procédé de fabrication générative d'un composant (2), comprenant les étapes consistant à ;
a) appliquer une couche de matière (36a, 36b, 36c) ayant une épaisseur de couche constante,
b) solidifier une zone de la couche de matière (36a, 36b, 36c) selon une section de composant,
c) générer une analyse par courants de Foucault de la zone solidifiée, une profondeur de balayage (z) correspondant à un multiple de l'épaisseur de couche,
d) déterminer une caractérisation de matière de la région solidifiée avec prise en compte d'une analyse par courants de Foucault précédente de zones solidifiées de couches de matière plus profondes (36a, 36b, 36c), et
e) répéter les étapes a) à d) jusqu'à réaliser le composant (2), **caractérisé en ce que**, lors de la comparaison des analyses par courants de Foucault, on prend en compte une pondération des couches de matière (36a, 36b, 36c) qui diminue avec la profondeur.

2. Procédé selon la revendication 1, dans lequel l'analyse par courants de Foucault est effectuée lors de l'application d'une nouvelle couche de matière (36a, 36b, 36c).

3. Procédé selon la revendication 1 ou la revendication 2, dans lequel les analyses par courants de Foucault sont effectuées dans une gamme de fréquences de 1 MHz à 10 MHz.

4. Procédé selon l'une des revendications précédentes, dans lequel à chaque analyse par courants de Foucault on effectue une mesure à plusieurs fréquences

5. Procédé selon l'une des revendications précédentes, dans lequel à chaque analyse par courants de Foucault on enregistre plusieurs images d'une couche de matière (35a, 36b, 36c) avec un décalage inférieur à l'écart entre les capteurs de courants de Foucault.

6. Procédé selon l'une des revendications précédentes, dans lequel la caractérisation de matière déterminée est utilisée pour corriger des paramètres de procédé en temps réel.

7. Procédé selon l'une quelconque des revendications précédentes, dans lequel les capteurs de courant de Foucault (34) sont nettoyés par un mouvement de secouage.

8. Dispositif (1) destiné à mettre en oeuvre un procédé selon l'une des revendications précédentes, comportant un réseau à courants de Foucault (30), mobile par rapport à un composant (2) à fabriquer, pour analyser une zone solidifiée d'une couche de matière (36a, 36b, 36c), une profondeur d'analyse (z) correspondant à un multiple de l'épaisseur de la couche, et un système d'exploitation (32) destiné à déterminer une caractérisation de matière de la zone solidifiée avec prise en compte d'une analyse par courants de Foucault précédente de zones solidifiées de couches de matière plus profondes (36a, 36b, 36c), **caractérisé en ce que**, lors de la comparaison des analyses par courants de Foucault, le système d'exploitation (32) prend en compte une pondération des couches de matière (36a, 36b, 36c) qui diminue avec la profondeur (z).

9. Dispositif selon la revendication 8, dans lequel le réseau à courant de Foucault (30) est positionné à l'arrière d'une racle (10).

10. Dispositif selon la revendication 8 ou la revendication 9, dans lequel le réseau à courants de Foucault (30) est un réseau de lignes courants de Foucault qui s'étend dans la direction longitudinale de la racle (10).

11. Dispositif selon la revendication 8 à 10, dans lequel le réseau à courants de Foucault (30) est constitué de capteurs à courants de Foucault (34) conformés en capteurs individuels ou en capteurs à demi-transmission dans un agencement hexagonal.

12. Dispositif selon l'une des revendications 9 à 12, dans lequel un dispositif d'agitation comportant au moins un élément piézoélectrique est prévu pour déplacer le réseau à courants de Foucault (30) selon un mouvement de secouage.

13. Dispositif selon l'une des revendications 8 à 12, dans lequel un dispositif de contrôle de distance automatique est prévu pour régler la distance du réseau à courants de Foucault (30) par rapport à la couche de matière solidifiée (36a, 36b, 36c) supérieure.
